# EUROPEAN PATENT SPECIFICATION

(11) **EP 4 104 271 B1**
(45) Date of publication and mention of the grant of the patent: **17.09.2025**
(21) Application number: 20705356.2
(22) Date of filing: 14.02.2020
(51) Int. Cl.: H02J 3/12, H02M 5/10, H02M 5/257, H02M 7/00

(54) **ELECTRICAL GRID TRANSFORMER SYSTEM**
TRANSFORMATORSYSTEM FÜR ELEKTRISCHES STROMNETZ
SYSTÈME DE TRANSFORMATEUR DE RÉSEAU ÉLECTRIQUE

(43) Date of publication of application: 21.12.2022
(73) Proprietor: Ampx Limited, London SW1Y 4LB (GB)
(72) Inventor: DESLANDES, Stephen Paul, London, Greater London SW1Y 4LB (GB); VILLARROEL RODRIGUEZ, Rafael David, London, Greater London SW1Y 4LB (GB); MOULIS, Václav, London, Greater London SW1Y 4LB (GB); BUCHANAN, Roderick, London, Greater London SW1Y 4LB (GB)
(74) Representative: Hoffmann Eitle
(86) International application number: PCT/EP2020/053873
(87) International publication number: WO 2021/160281

(56) References cited:
- WO-A1-96/05642
- CN-A- 105 826 924
- CN-A- 108 964 026

## Description

### [Technical Field]

Example aspects herein generally relate to a transformer system for use in an electrical grid, and more specifically to a transformer system for converting a grid voltage to a regulated voltage which is output to a power line.

### [Background]

In order to increase the power transfer capability of an electrical grid for distributing electricity to consumers, flexible alternating current transmission system (FACTS) controllers are used to improve power factor voltage profiles in distribution grids. In recent years, the importance of effectively incorporating FACTS controllers into distribution grids has grown due to the unconventional power flow and the voltage profiles in distribution grids that are caused by the increased use of distributed energy resources (DERs). Generally, FACTS controllers can be classified as being of a variable impedance type, such as a Static VAR Compensator (SVC) or a Thyristor Controlled Series Compensator (TCSC), or a voltage source converter type such as a Static Synchronous Compensator (STATCOM), a Static Synchronous Series Compensator (SSSC) or a Unified Power Flow Controller (UPFC).

CN105826924A concerns a series-parallel combined compensator for suppressing HVDC commutation failure, wherein the series-parallel combined compensator is arranged between the AC bus on the inverter side of the HVDC system and the receiving end power grid, and the series-parallel combined compensator includes a switching unit, an output voltage control unit and an output current control unit connected to each other.

WO 96/05642 relates to first and second dc linked, preferably voltage sourced, inverters that are connected to an electric power transmission line in shunt and in series, respectively, by coupling transformers. Firing of the GTO-thyristors of the first inverter is controlled to regulate reactive power on the transmission line and to supply real power requirements of the second inverter. The second inverter is controlled to inject into the transmission line in series a voltage which can be adjusted in magnitude and from zero through 360 degrees in phase with respect to the transmission line voltage to selectively adjust any one or more of transmission line voltage magnitude, transmission line impedance and transmission line voltage phase angle. In a high power configuration of the controller each of the inverters includes a plurality of six-pulse inverter modules connected by interstage transformers to form balanced higher order pulse groups controlled through pulse width modulation or through adjustment of the phase between opposite groups to generate the appropriate ac voltages.

### [Summary]

The present invention provides a transformer system for use in a distribution grid as set out in claim 1.

### [Description of the drawings]

Example embodiments will now be explained in detail, by way of non-limiting example only, with reference to the accompanying figures described below. Like reference numerals appearing in different ones of the figures can denote identical or functionally similar elements, unless indicated otherwise.
Figure 1 is a schematic illustration of a transformer system according to a first example embodiment herein.
Figure 2 illustrates an example arrangement of the components of the transformer system in the first example embodiment.
Figure 3 is a schematic illustration of the transformer system of Figure 1 showing an example of the power electronics circuitry.
Figure 4 shows an example hardware implementation of a controller for switching the electronic circuitry of the transformer system in accordance with the first example embodiment.
Figure 5 is a circuit diagram of a first example implementation of the transformer system in Figure 1.
Figure 6 is a circuit diagram of a second example implementation of a transformer system in Figure 1.

### [Detailed Description of Example Embodiments]

Conventional distribution transformers are not manufactured with reactive power control capability. Instead, FACTS controllers are typically retrofitted to the distribution grid in order to allow reactive power control on a power line connected to an output of the distribution transformer. This retrofitting process typically involves extensive installation work, which typically requires cutting into the power line to connect the FACTS controller.

In addition, due the size and weight of FACTS controllers, it is often difficult to install these devices at a site of a distribution transformer, which is usually not provided with enough space to accommodate the extra installation footprint that these devices would require. The same problem exists for pole-mounted transformers, as the supporting poles have limited installation space and FACTS controllers cannot be easily integrated without modifying the underlying supporting structure.

Furthermore, distribution transformers at grid edge, used to step supply voltage down to consumer levels, are not typically equipped with any form of voltage regulating capability. The higher voltage transformers that supply these often have 'On Load Tap Changers' that are able to adjust voltage in discrete steps, with only a limited number of changes available per day. This inherently limits the flexibility of the distribution network in dealing with issues emerging at low voltage.

In light of the aforementioned problems, the present inventors have devised a transformer system that integrates a step-down transformer with power electronics and coupling transformers for providing both voltage regulation and reactive power control.

More specifically, there is provided, in accordance with a first example aspect herein, a transformer system for use in an electrical grid, the transformer system configured to convert a grid voltage received from the electrical grid to a regulated voltage and output the regulated voltage to a power line. The transformer system comprises a first transformer configured to step down the grid voltage to an unregulated voltage and provide the unregulated voltage at an output of the first transformer. The transformer system further comprises a shunt coupling transformer connected in parallel with the output of the first transformer and further connected to a power electronics circuitry. The transformer system also comprises a series coupling transformer connected in series with the output of the first transformer and further connected to the power electronics circuitry. The power electronics circuitry is configured to add via the series coupling transformer a conditioning voltage in series to the unregulated voltage to generate the regulated voltage. The first transformer, the series coupling transformer and the shunt coupling transformer are housed in a single transformer tank. The power electronics circuitry is housed in a power electronics enclosure separate from the transformer tank. In addition, each of the transformer tank and the power electronics enclosure comprises one or more openings through which electrical connections between the shunt coupling transformer, the series coupling transformer and the power electronics circuitry pass.

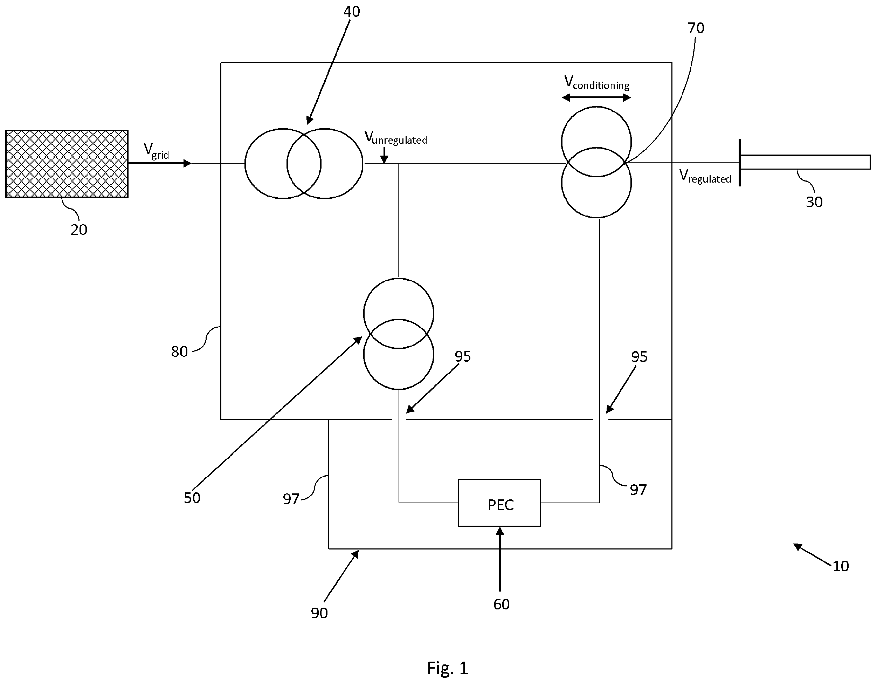

Figure 1 is a schematic illustration of a transformer system 10 for use in an electrical grid, in accordance with a first example embodiment herein.

The transformer system 10 is configured to convert a grid voltage V_{grid} from an electrical grid to a regulated voltage V_{regulated} and output the regulated voltage V_{regulated} to a power line 30. The transformer system 10 is configured to step down a distribution grid voltage V_{grid} of one or more distribution grid voltages in a distribution grid.

As illustrated in Fig. 1, the transformer system 10 comprises a first transformer 40 configured to step down the grid voltage V_{grid} to an unregulated voltage V_{unregulated} and provide the unregulated voltage V_{unregulated} at an output of the first transformer 40. The first transformer 40 may, as in the present example embodiment, be a main power transformer of the transformer system 10. The transformer system 10 further comprises a shunt coupling transformer 50 that is connected in parallel with the output of the first transformer 40 and further connected to power electronics circuitry (PEC) 60. Furthermore, the transformer system 10 comprises a series coupling transformer 70 that is connected in series with the output of the first transformer 40 and further connected to the power electronics circuitry 60.

The power electronics circuitry 60 is configured to add, via the series transformer 70, a conditioning voltage V_{conditioning} in series to the unregulated voltage V_{unregulated} to generate the regulated voltage V_{regulated}. The power electronics circuitry 60 may, as in the present example embodiment, comprise one or more switching elements whose switching is controllable by a controller (not shown in Fig. 1) to determine at least one of a magnitude and a phase of the conditioning voltage V_{conditioning}.

In some example embodiments, the power electronics circuitry 60 and the series coupling transformer 70 may be configured to provide the conditioning voltage V_{conditioning} either substantially in-phase or substantially in antiphase with the unregulated voltage V_{unregulated} so as to control an active power flow of the power line 30. In particular, adding a voltage of a controllable magnitude either in phase or in anti-phase with respect to the unregulated voltage V_{unregulated} allows the transformer system 10 to regulate its output voltage to the power line 30 in order to compensate voltage deviations from a voltage level required by the consumer. These voltage deviations may be voltage drops caused by an increased load or by line reactance, or voltage rises caused by high penetration of Distributed Energy Resources (DERs).

In other example embodiments, the power electronics circuitry 60 and the series coupling transformer 70 may be configured to provide the conditioning voltage V_{conditioning} substantially in quadrature phase with respect to an output current of the first transformer 40, so as to control a reactive power flow on the power line 30. In particular, by inserting a conditioning voltage V_{conditioning} that lags the output current of the first transformer 40 by quadrature phase, a capacitive compensation effect is achieved and the power electronics circuitry 60 provides reactive power to the power line 30. On the other hand, inserting a conditioning voltage V_{conditioning} that leads the output current of the first transformer 40 by quadrature phase consumes reactive power from the power line 30 by providing an inductive compensation effect. Furthermore, in some example embodiments, the conditioning voltage V_{conditioning} may have any phase such that the conditioning voltage V_{conditioning} causes both active power and reactive power exchange with the power line 30.

In addition, in some example embodiments, the power electronics circuitry 60 is configured to exchange reactive power with the power line 30 via the shunt coupling transformer 50 to provide shunt reactive compensation of the power line 30. In particular, the power electronics circuitry 60 may be operable as a current source to inject a controllable current via the shunt coupling transformer 50 into the power line 30. When the injected current is in phase quadrature with respect to the unregulated voltage V_{unregulated}, the power electronics circuitry 60 controls reactive power flow on the power line 30. When the injected current is in phase or in antiphase with the unregulated voltage V_{unregulated}, the real power flow on the power line 30 is controlled. When the injected current has both in-phase and quadrature components with respect to the unregulated voltage V_{unregulated}, the power electronics circuitry 60 controls both real and reactive power of the power line 30. The control of reactive power via transformer system 10 allows for power factor correction to improve the efficiency of electricity transportation over power line 30.

In Fig. 1, the first transformer 40, the series coupling transformer 70 and the shunt coupling transformer 50 are housed in a single transformer tank 80, and the power electronics circuitry 60 is housed in a power electronics enclosure 90 which is separate from the transformer tank 80. In the present example embodiment, the transformer tank 80 contains a liquid coolant and the first transformer 40, the series coupling transformer 70 and the shunt coupling transformer 50 are immersed in the liquid coolant. The liquid coolant may, as in the present example embodiment, be transformer oil, which is typically a mineral-based oil. However, other suitable alternatives, such as ester-based dielectric oils, can also be used.

In Fig. 1, each of the transformer tank 80 and the power electronics enclosure 90 comprises one or more openings 95 through which electrical connections 97 between the shunt coupling transformers 50, the series coupling transformer 70 and the power electronics circuitry 60 pass.

The transformer system 10 further comprises a frame supporting the first transformer 40, the frame being configured to distribute a weight of the first transformer 40 over a base of the frame having a footprint substantially the same as a footprint of the first transformer 40. The frame further supports the series coupling transformer 70 and the shunt coupling transformer 50 so as to distribute a weight of the series coupling transformer 70 and the shunt coupling transformer 50 over the base of the frame. The transformer system 10 of the present example embodiment takes the form of a ground-mounted transformer system. However, a transformer system according to another example embodiment may be pole-mounted instead.

In the present example embodiment, the use of a supporting frame having a footprint substantially the same as the footprint of the first transformer 40 allows the installation footprint of the transformer system 10 to be significantly reduced compared to installing a FACTS controller (having equivalent functionality to the coupling transformers and the power electronics circuitry) as an add-on component at the site of the first transformer 40. In particular, due the size and weight of typical FACTS controllers, it can be difficult to integrate these additional devices into substations or other sites that are not provided with the ground space require to accommodate devices of that size. In this regard, the transformer system 10 of Fig. 1 allows for compact arrangement of the first transformer 40 and the two coupling transformers such that installation footprint can be minimized and the transformer system 10 can be installed in the limited space available in substations or other sites.

It should be noted that in Fig. 1, the voltage regulation and power flow control functions provided by the power electronics circuitry 60 through the two coupling transformers 50 and 70 are fully integrated into a single transformer system. This is advantageous, as conventional FACTS controllers must be retrofitted onto the power line which requires extensive installation work and is difficult to maintain. However, the transformer system 10 of Fig. 1 can be easily installed by directly replacing an existing distribution transformer and, at the same time, provide power flow control functions which are not provided by existing distribution transformers.

In addition, coupling transformers used with FACTS controllers are typically dry-cooled (air-cooled) while distribution transformers are typically liquid-cooled. By housing the series coupling transformer 70 and shunt coupling transformer 50 in the same transformer tank 80 as the first transformer 40, the coupling transformers can also be liquid-cooled, allowing a more effective heat dissipation, an increased capacity to withstand electrical breakdown, also providing a higher flashing point and aging resistivity, whilst making maintenance easier, as only one cooling system needs to be maintained.

Moreover, FACTS controllers are typically air-cooled and therefore the coupling transformers and their power electronics circuitry are typically placed in the same enclosure. However, in the example embodiment of Fig. 1, the power electronics circuitry 60 is contained in a power electronics enclosure 60 that is separate from the transformer tank 80, which allows maintenance of the power electronics circuitry 60 to be carried out safely, without needing to disconnect the coupling transformers from the power line 30. In particular, this arrangement allows defective power electronics components to be serviced more easily.

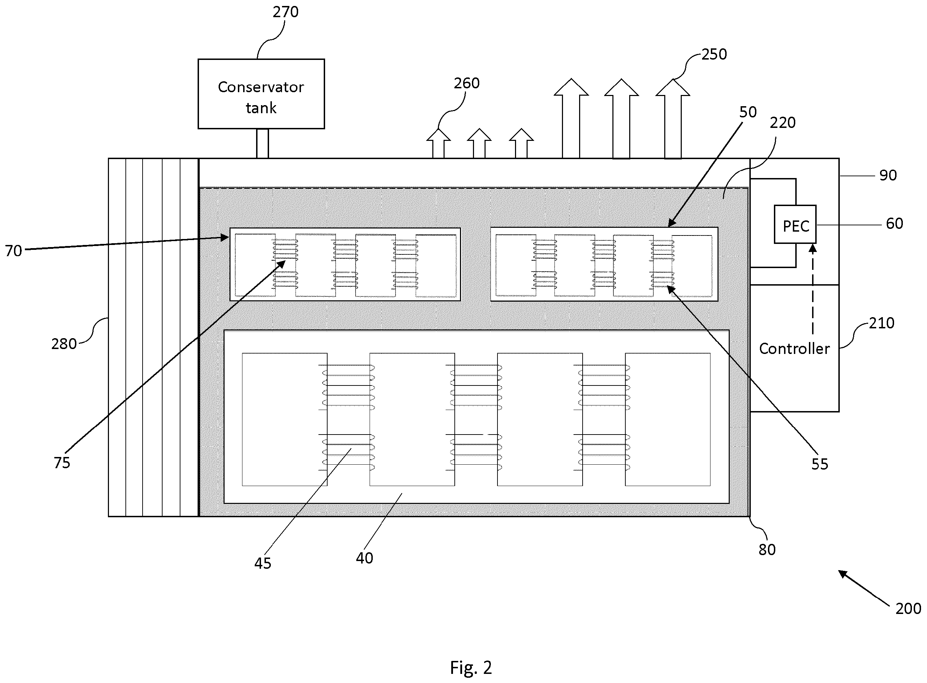

Figure 2 illustrates an example arrangement of the components in the transformer system 10 of Fig. 1. In Fig. 2, the transformer system 200, the first transformer 40, the series coupling transformer 70 and the shunt coupling transformer 50 are immersed in transformer oil 220 within transformer tank 80. Furthermore, the three transformers are supported by a frame that substantially distributes their weight over a base of the frame which has substantially the same footprint as the first transformer 40. However, it should be noted that the particular arrangement of the three transformers are by no means limited to the illustration in Fig. 2. For example, in some example embodiments, the two coupling transformers 50 and 70 may be arranged one on top of the other.

The transformer system 200 is configured to down-convert a three-phase grid voltage V_{grid} and therefore, each of the first transformer 40, the series coupling transformer 70 and the shunt coupling transformer 50 has three sets of primary and secondary windings, each set corresponding to a respective phase. However, in some embodiments, the transformer system 200 may instead be configured to convert a single-phase grid voltage V_{grid} and therefore, each of the three transformers may have a single set of primary and secondary windings.

In Fig. 2, each of the first transformer 40, the series coupling transformer 70 and the shunt coupling transformer 50 is a three-phase transformer which may have a three-legged or five-legged magnetic core, depending on design criteria. However, a bank of three-single phase transformers may alternatively be used to for any of the transformers. Configuration and electromagnetic design of these transformers are not limited to the depiction of Fig. 2.

In Fig. 2, each of the three transformers further comprises a laminated core formed of sheets of silicon steel for providing a low reluctance path for the flow of magnetic flux. However, the core can alternatively be formed from any material having high permeability such as, for example, carbonyl iron or ferrite ceramics. Each of the three transformers may, as in the present example embodiment, be a core-type transformer, although a shell-type transformer can also be used for any of the transformers. Furthermore, each of the transformers comprises a plurality of windings wrapped around the transformer core. The plurality of windings may, as in the present example embodiment, be formed of copper, although aluminum or any other materials having high conductivity and good mechanical properties may alternatively be used.

The shunt coupling transformer 50 is connected in parallel with the output of the first transformer 40 such that a winding 45 of the first transformer 40 is connected in parallel with a winding 55 of the shunt coupling transformer 50. Furthermore, the series coupling transformer 70 is connected in series with the output of the first transformer 40 such that the winding 45 of the first transformer 40 is further connected in series with a winding 75 of the series coupling transformer 70.

The power electronics enclosure 90 is attached to a side of the transformer tank 80. However, the power electronics enclosure 90 may alternatively be mounted on top of the transformer tank 80 or placed in any part of the transformer system 10 that is conveniently accessible for maintenance.

In addition, the transformer system 200 may, as in the present example embodiment, comprise a plurality of transformer bushings 250 and 260, a radiator element 280 and a conservator tank 220.

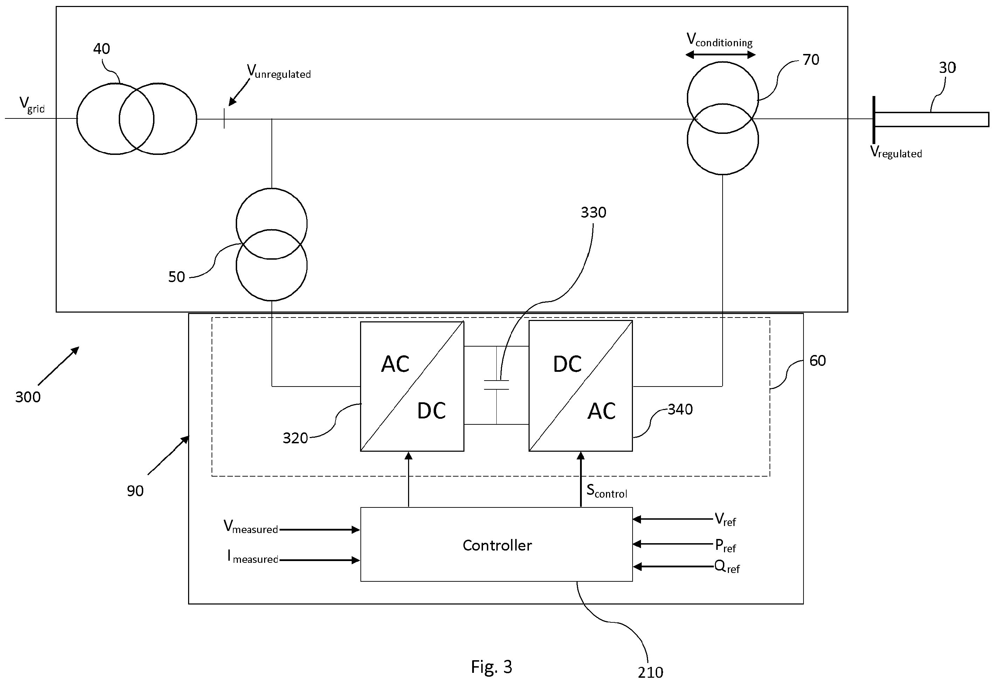

Figure 3 illustrates an example implementation of the transformer system 10 of Fig. 1, and more particularly, an example implementation of the power electronics module 60. In Fig. 3, the transformer system 300 comprises a controller 210 configured to switch the one or more switching elements of the power electronics circuitry 60 such that the power electronics circuitry 60 adds the conditioning voltage V_{conditioning} to the unregulated voltage to generate the regulated voltage V_{regulated}. However, in some embodiments, controller 210 does not form part of transformer system 300 and is instead provided as an external device that is communicatively coupled to the transformer system 300.

In Fig. 3, power electronics circuitry 60 comprises a rectifier 320, an inverter 340 and a DC link capacitor 330 connecting the rectifier 320 and inverter 340. The rectifier 320 comprises an AC terminal that is connected to the shunt coupling transformer 50 and a DC terminal that is connected to the DC link capacitor 330. The rectifier 320 is operable to charge the DC link capacitor 330 by drawing power from the output of the first transformer 40 via the shunt coupling transformer 50. Furthermore, the inverter 340 comprises a DC terminal that is connected to the DC link capacitor 330 and an AC terminal that is connected to the series coupling transformer 70. The inverter 340 is operable to convert a DC voltage of the DC link capacitor 330 to an AC voltage so as to cause the series coupling transformer 70 to add the conditioning voltage V_{conditioning} in series to the unregulated voltage V_{unregulated}.

The controller 210 may, as in the present example embodiment, be configured to receive measurement values indicative of at least one of an output voltage of the first transformer 40, an output current of the first transformer 40, an output voltage of the transformer system 300, an output current of the transformer system 300, and a voltage of the DC link capacitor 330. In this case, the controller 210 is further configured to control the switching of the one or more switching elements the power electronics circuitry 60 based on the measurement values. In some embodiments, the controller 210 is configured to calculate a target voltage phase and a target voltage magnitude based on the measurement values and one or more reference parameters, and to control the switching of the power electronics circuitry 60 such that the conditioning voltage V_{conditioning} has substantially the target voltage magnitude and the target voltage phase. The reference parameters may comprise one or more of a value indicative of a target voltage of the power line 30, a value indicative of a target real power flow of the power line, a value indicative of a target reactive power flow of the power line 30, and a target power factor. However, additional reference parameters may also be used.

Furthermore, the controller 210 may, as in the present example embodiment, further be configured to implement a control law, such as proportional, integral and derivative, PID, control, for example, and thus use a set of P, I and D values to calculate a switching control signal S_{control} for controlling the switching of the one or more switching elements in the power electronics circuitry 60. For example, the controller 210 may determine an error signal based on the one or more measurement values and the one more reference parameters, and generate the switching control signal S_{control} based on the error signal. The controller 210 may further control the switching of the power electronics circuitry 60 using the switching control signal S_{control}. It should be noted that the control law algorithm need not be PID, and another control law algorithm, such as PI, PD, P and I, can alternatively be used to generate the switching control signal S_{control}.

In some example embodiments, the transformer system 300 may comprise measurement circuitry for obtaining the measurements values at the output of the first transformer 40 and/or at the output of transformer system 300, and providing the measurements to controller 210.

Furthermore, in some example embodiments, the transformer system 300 may comprise a telemetry module (not shown) for receiving a command requesting the switching of the power electronics circuitry 60 to be adjusted. The controller 210 may further derive a modified switching control signal S_{control} based on the command and control the switching of the power electronics circuitry 60 using the modified switching control signal S_{control}. For example, transformer system 300 may receive a command requesting the transformer system 300 to change its voltage set point to regulate the voltage of the power line 30, or receive a command to adjust the reactive power flow of the power line 30 to obtain a target power factor. The controller 210 may further switch the power electronics module 60 based on this command. In such an embodiment, the controller 210 does not need to calculate the switching control signal based on the measurement values and may instead derive the switching control signal S_{control} based on the command.

The configuration of the power electronics circuitry 60 in Fig. 3 allows the transformer system 10 to buck or boost voltage over a continuous range. This is advantageous over conventional distribution transformers, which utilize tap changers or cascading transformers to regulate voltage at discrete levels.

Furthermore, the latency of control is governed by the switching frequency of the inverter 340, rather than the speed that discrete contactors, breakers or tap changers can operate at. Therefore, response to changes in load can be almost instantaneous, allowing the output voltage to be tightly regulated.

Moreover, varying the phase relationship between the conditioning voltage V_{conditioning} and the output voltage of the first transformer 40 additionally allows for the transfer of reactive power into or out of power line 30 using switching control techniques on the inverter.

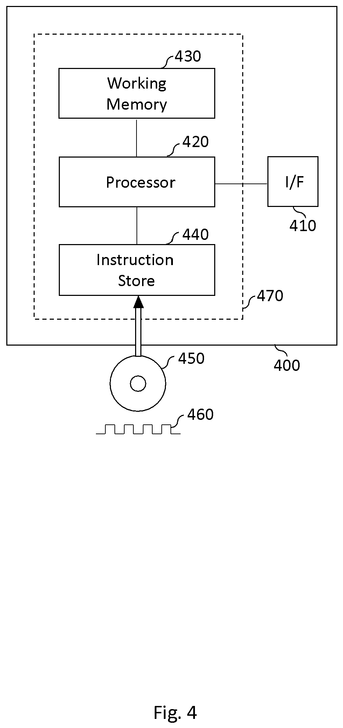

Figure 4 shows an example implementation of controller 210, in programmable signal processing hardware. The signal processing apparatus 400 comprises an interface module 410 for receiving voltage and/or current measurements taken at the output of the transformer system 300, and for outputting a switching control signal S_{control} to switch the power electronics circuitry 60. The signal processing apparatus 400 further comprises a processor (CPU) 420, a working memory 430 (e.g. a random access memory) and an instruction store 440 storing a computer program comprising computer-readable instructions which, when executed by the processor 420, cause the processor 420 to perform the processing operations of the controller 210. The instruction store 440 may comprise a ROM (e.g. in the form of an electrically-erasable programmable read-only memory (EEPROM) or flash memory) which is pre-loaded with the computer-readable instructions. Alternatively, the instruction store 440 may comprise a RAM or similar type of memory, and the computer-readable instructions can be input thereto from a computer program product, such as a computer-readable storage medium 450 such as a CD-ROM, etc. or a computer-readable signal 460 carrying the computer-readable instructions.

In the present example embodiment, the combination of the hardware components shown in Fig. 4, comprising the processor 420, the working memory 430 and the instruction store 440, is configured to implement the functionality of the controller 210.

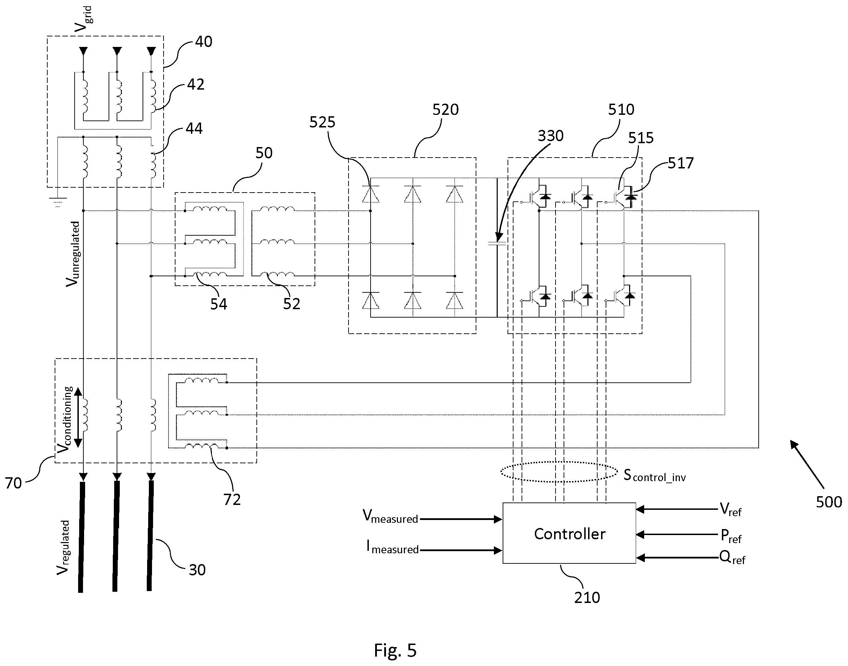

Figure 5 illustrates further implementation details of the transformer system 300 shown in Fig. 3. The transformer system 500 shown in Fig. 5 is configured to step down a three-phase voltage and therefore utilizes a three-phase rectifier and a three-phase inverter.

However, single-phase rectifier and single-phase inverter may alternatively be used for a single-phase implementation of the transformer system 10.

In Fig. 5, the rectifier 320 of Fig. 3 is implemented as a 3-phase 6-pulse bridge rectifier 520 that performs uncontrolled rectification by using two diodes 525 for each phase of the three-phase input into the rectifier 520. Rectifier 520 is operable convert an alternating current drawn from the output of the first transformer 40 to a direct current to charge the DC link capacitor 330. In addition to storing energy, the DC link capacitor 330 also acts as a filter to reduce voltage ripple of the stored voltage across the DC link capacitor 330.

Although a specific rectifier circuit is shown in Fig. 5, it should be understood that any suitable rectifier topology, such as, for example, a 12 pulse bridge rectifier, may alternatively be used. Furthermore, the rectifier 520 of Fig. 5 may alternatively be implemented as a phase-controlled rectifier, for example, by replacing each diode 325 with a thyristor and controlling the firing angle of each thyristor to vary the voltage across the DC link capacitor 330. In some example embodiments, the rectifier 320 may be implemented as a voltage source converter that is operable to perform bidirectional power conversion. More generally, rectifier 320 in Fig. 3 can be implemented using any suitable topology and comprise any suitable switching element, such as, for example diodes, thyristors, insulated-gate bipolar transistors (IGBT), gate turn-off thyristors (GTO) or metal-oxide-semiconductor field-effect transistor (MOSFET).

Returning to Fig. 5, inverter 340 of Fig. 3 is implemented in Fig. 5, as a voltage source converter VSC 510, and more specifically, a three-phase, two-level voltage source converter having six IGBTs 515 and a diode 517 connected in anti-parallel to each IGBT 515. VSC 510 allows for bidirectional power conversion and can be operated either as a rectifier or as an inverter. When operated as an inverter, VSC 510 converts the direct voltage across the DC link capacitor 330 to an AC voltage based on the switching control signals S_{control_inv} in order to cause the series coupling transformer 70 to add the conditioning voltage V_{conditioning}. On the other hand, when operated as a rectifier, VSC 510 draws power from the power line 30 to charge the DC link capacitor 330.

It should be noted that although inverter 340 of Fig. 3 is implemented in Fig. 5 as a three-phase, two-level voltage source converter, inverter 340 can alternatively be implemented using other types of inverter topologies such as, for example, a three-level converter or a modular multi-level converter. Furthermore, inverter 340 may comprise any suitable other switching elements, such as, for example, GTOs or MOSFETS.

In Fig. 5, VSC 510 is operable to add the conditioning voltage V_{conditioning} based on switching control signal S_{control_inv} of the controller 210. For example, in the present embodiment, controller 210 implements pulse width modulation and controls the magnitude of the conditioning voltage V_{conditioning} by varying the modulation index of the pulse width modulation to generate the switching control signal S_{control_inv}. Furthermore, to control the phase of the conditioning voltage V_{conditioning}, controller 210 may vary the phase of the conditioning voltage V_{conditioning} by varying the firing angle of each IGBT 515 of VSC 510 to generate the switching control signal S_{control_inv}. The controller 210 may, as in the present embodiment, determine the switching control signal S_{control_inv} using measurement values and/or one or more references parameters as previously explained for the example of Fig. 3. It should be noted that the controller 210 is not limited to generating the switching control signal by pulse width modulation and may alternatively employ other suitable modulation methods such as pulse frequency modulation and pulse amplitude modulation.

In Fig. 5, first transformer 40 is configured to receive a grid voltage V_{grid} of 11 kV at 50 Hz and output a stepped down voltage of around 400 V as the unregulated voltage, although other voltage levels or frequencies may be used. In the present example, the first transformer 40 comprises primary windings 42 connected in a delta configuration and secondary windings 44 connected in a star configuration, although other winding configurations such as star-star, delta-delta, or star-delta may alternatively be used.

In Fig. 5, the shunt coupling transformer 50 comprises primary windings 52 connected in a delta configuration and secondary windings 54 connected in a star configuration, although as with the first transformer 40, other connection configurations may also be used. The use of shunt coupling transformer 50 provides galvanic isolation between the output of the first transformer 40 and the power electronics circuitry 60. Furthermore, by connecting the primary windings 54 of the shunt coupling transformer 50 in a delta configuration, third harmonic distortion caused by non-linear loads can be reduced. In the present example, the shunt coupling transformer 50 has a turns ratio of 1:2 such that the maximum voltage across the DC link capacitor is approximately 1100 V. By selecting the turns ratio of the shunt coupling transformer to be greater than unity, the maximum voltage that can be maintained the DC link capacitor 330 can be increased. However, the shunt coupling transformer 50 is not limited in this regard and may alternatively employ any suitable turns ratio.

In Fig. 5, the series coupling transformer 70 comprises primary windings that are arranged in a delta configuration so that third harmonic distortion caused by non-linear loads can be reduced. However, a star configuration may alternatively be used. In the present example, the series coupling transformer 70 is configured to step down a voltage provided by the VSC 510 and add the stepped-down voltage as the conditioning voltage V_{conditioning} in series with the unregulated voltage V_{unregulated}. In the present example, the series coupling transformer 70 is configured with a turns ratio of 11:1, which allows a maximum voltage regulation of approximately 18 % of the 400V output of the first transformer 40. However, any suitable turns ratio may be used depending on the desired level of voltage regulation.

In Fig. 5, by using an uncontrolled rectifier instead of an active rectifier, the manufacturing cost of the transformer system 500 and the complexity of controller 210 can be reduced. However, implementing rectifier 320 as an uncontrolled rectifier 520 does not allow the transformer system 500 to control reactive power control via the shunt coupling transformer 50. Therefore, in some example embodiments, the rectifier 320 in Fig. 3 is implemented as a voltage source converter.

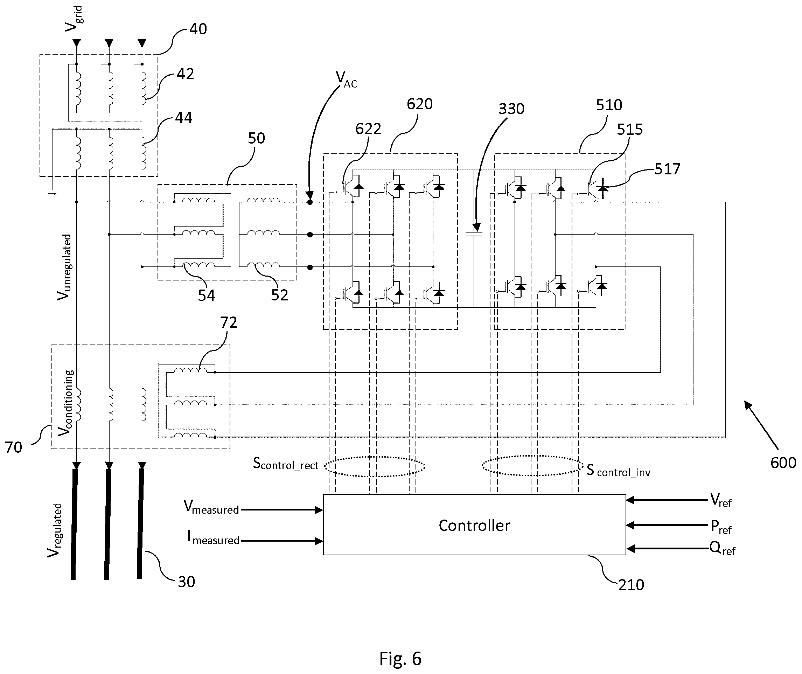

Figure 6 illustrates an example implementation wherein the uncontrolled rectifier 520 of Fig. 5 is implemented as a voltage source converter, VSC 620 that is configured to be switched by switching control signal S_{control_rect} from controller 210 and exchange reactive power with the output of the first transformer 40 (and therefore exchange reactive power with the power line 30) based on the switching control signal S_{control_rect}. It should be noted that any converter topology capable of bidirectional power conversion may be used in place of VSC 620. Furthermore, VSC 620 may be implemented using any suitable switching element, such as diodes, thyristors, IGBTs, GTOs or MOSFETs.

In Fig. 6, VSC 620 and VSC 510 are operable to allow for bidirectional flow of active power between their DC terminals to facilitate exchange of active power. In particular, VSC 620 and VSC 510 are each operable to perform either rectification or inversion depending on the switching control signals S_{control_rect} and S_{control_rect} provided by controller 210. In this manner, VSC 620 is operable to discharge DC link capacitor 330 to provide active power via the shunt coupling transformer 50 to the power line 30.

As with the embodiment in Fig. 5, the VSC 510 in Fig. 6 switchable by the controller 210 to add the conditioning voltage V_{conditioning} to cause a power exchange with the power line 30. The active power exchange depends on the in-phase component of the conditioning voltage V_{conditioning} relative to the output current of the first transformer 40, while the reactive power exchange depends on the quadrature-phase component of the conditioning voltage V_{conditioning} relative to the output current of the first transformer.

In Fig. 6, the real power exchanged by VSC 510 with the output of the first transformer 40 is converted into a real power demand at the DC link capacitor 330. VSC 620 is therefore operable to supply the real power demanded by VSC 510 at the DC link capacitor 330 in order to maintain a constant voltage across the DC link capacitor 330.

In addition, VSC 620 is also operable to be switched by controller 210 to supply reactive power to or absorb reactive power from the power line 30, thereby providing independent control of the reactive power flow of the power line 30. In the present example embodiment, to control the exchange of real and reactive power by VSC 620, controller 210 is configured to switch VSC 620 to control the voltage V_{AC} at the AC terminal of the VSC 620. For example, when the controller 210 employs pulse width modulation, the controller 210 may vary the magnitude of voltage V_{AC} by changing the modulation index used to generate S_{control_rect}. Furthermore, controller 210 may vary the phase of voltage V_{AC} by generating switching control signal S_{control_rect} to change the firing angle of each IGBT 622 of the VSC 620. When the magnitude of voltage V_{AC} is less than the magnitude of the unregulated voltage V_{unregulated} at the output of the first transformer 40, reactive power is absorbed by VSC 620 from the output of the first transformer 40. On the other hand, if the magnitude of the voltage V_{AC} is greater than the magnitude of V_{unregulated}, then reactive power is supplied by the VSC 620 to the power line 30. Furthermore, when the phase angle of voltage V_{AC} at the AC terminal of VSC 620 is greater than phase angle of the voltage V_{unregulated}, VSC 620 supplies real power to the power line 30. When the phase angle of the voltage V_{AC} is less than the voltage V_{unregulated}, then VSC 620 absorbs real power from power line 30.

Accordingly, by using two voltage source converters as shown in Fig. 6, the transformer system 600 allows for independent control of real power and reactive power, as VSC 620 is able to independently provide reactive power control by varying voltage V_{AC} at its AC terminal.

## Claims

1. A transformer system (10) for use in a distribution grid, the transformer system configured to convert a grid voltage (v_{grid}) from an electrical grid (20) to a regulated voltage (V_{regulated}) that is a distribution level voltage and output the regulated voltage (V_{regulated}) to a power line (30), the transformer system (10) comprising:
a first transformer (40) configured to step down the grid voltage (v_{grid}) to an unregulated voltage (V_{unregulated}) and provide the unregulated voltage (V_{unregulated}) at an output of the first transformer (40);
a shunt coupling transformer (50) connected in parallel with the output of the first transformer (40) and further connected to power electronics circuitry (60); and
a series coupling transformer (70) connected in series with the output of the first transformer (40) and further connected to the power electronics circuitry (60), wherein
the power electronics circuitry (60) is configured to add via the series coupling transformer (70) a conditioning voltage (V_{conditioning}) in series to the unregulated voltage (V_{unregulated}) to generate the regulated voltage (V_{regulated}),
the first transformer (40), the series coupling transformer (70) and the shunt coupling transformer (50) are housed in a single transformer tank (80),
the power electronics circuitry (60) is housed in a power electronics enclosure (90) separate from the transformer tank (80), and
each of the transformer tank (80) and the power electronics enclosure (90) comprises one or more openings (95) through which electrical connections (97) between the shunt coupling transformer (50), the series coupling transformer (70) and the power electronics circuitry (60) pass,
wherein the transformer system (10) further comprises a frame supporting the first transformer (40), the frame being configured to distribute a weight of the first transformer (40) over a base of the frame having a footprint substantially the same as a footprint of the first transformer (40), the frame further supporting the series coupling transformer (70) and the shunt coupling transformer (50) so as to distribute a weight of the series coupling transformer (70) and the shunt coupling transformer (50) over the base of the frame.

2. The transformer system (10) of claim 1, wherein the power electronics enclosure (90) is mounted on top of the transformer tank (80) or attached to at least one side of the transformer tank (80).

3. The transformer system (10) of claim 1, wherein the shunt coupling transformer (50) is connected in parallel with the output of the first transformer (40) such that a winding (45) of the first transformer (40) is connected in parallel with a winding (55) of the shunt coupling transformer (50), and wherein the series coupling transformer (70) is connected in series with the output of the first transformer (40) such that the winding (45) of the first transformer (40) is further connected in series with a winding (75) of the series coupling transformer (70).

4. The transformer system (10) of any of claims 1 to 3, wherein the power electronics circuitry (60) comprises one or more switching elements (342) whose switching is controllable by a controller (210) to determine at least one of a magnitude and a phase of the conditioning voltage (V_{conditioning}).

5. The transformer system (10) of any of claims 1 to 4, wherein the power electronics circuitry (60) and the series coupling transformer (70) are configured to provide the conditioning voltage (V_{conditioning}) either substantially in-phase or substantially in antiphase with the unregulated voltage (V_{unregulated}) so as to control an active power flow of the power line (30).

6. The transformer system (10) of any of claims 1 to 4, wherein the power electronics circuitry (60) and the series coupling transformer (70) are configured to provide the conditioning voltage (V_{conditioning}) substantially in quadrature phase relative to an output current of the first transformer (40) so as to control a reactive power flow of the power line (30).

7. The transformer system (10) of any preceding claim, wherein the power electronics circuitry (60) comprises a rectifier (320), an inverter (340) and a DC link capacitor (330), and wherein
the rectifier (320) comprises a first AC terminal connected to the shunt coupling transformer (50) and a first DC terminal connected to the DC link capacitor (330), the rectifier (320) being operable to charge the DC link capacitor (330) by drawing power from the output of the first transformer (40) via the shunt coupling transformer (50), and
the inverter (340) comprises a second DC terminal connected to the DC link capacitor (330) and a second AC terminal connected to the series coupling transformer (70), the inverter (340) being operable to convert a DC voltage of the DC link capacitor (330) to an AC voltage so as to cause the series coupling transformer (70) to add the conditioning voltage (V_{conditioning}) in series to the unregulated voltage (V_{unregulated}).

8. The transformer system (10) of claim 7, wherein the inverter (340) is a first voltage source converter (510) configured to charge the DC link capacitor (330) via the series coupling transformer (70).

9. The transformer system (10) of claim 7 or claim 8, wherein the rectifier (320) is a second voltage source converter (620) configured to control reactive power flow of the power line (40) via the shunt coupling transformer (50).

10. The transformer system (10) of claim 9, wherein the second voltage source converter (620) is configured to control the reactive power flow of the power line (30) based on a magnitude of a voltage at the first AC terminal of the rectifier (320), and wherein the second voltage source converter (620) is configured to control a real power flow of the power line based on a phase of the voltage at the first AC terminal.

11. The transformer system (10) of any of claims 7 to 10, wherein
the shunt coupling transformer (50) is configured to step up the unregulated voltage (V_{unregulated}) and provide the stepped-up unregulated voltage to the rectifier (320), and
the series coupling transformer (70) is configured to step down an output voltage of the inverter (340) and provide the stepped-down voltage as the conditioning voltage (V_{conditioning}).

12. The transformer system (10) of any preceding claim, wherein the transformer system (10) further comprises a controller (210) configured to receive measurement values indicative of at least one of an output voltage of the transformer system (10), an output current of the transformer system (10), an output voltage of the first transformer (40), and an output current of the first transformer (40), and wherein the controller (210) is configured to control operation of the power electronics circuitry (60) based on the received measurement values.

13. The transformer system (10) of any preceding claim, wherein the transformer system (10) is configured to receive, as the grid voltage (V_{grid}), a three-phase grid voltage or a single-phase grid voltage.

14. The transformer system (10) of any preceding claim, wherein the transformer tank (80) contains a liquid coolant and the first transformer (40), the series coupling transformer (70) and the shunt coupling transformer (50) are immersed in the liquid coolant.

## Patentansprüche

1. Transformatorsystem (10) zur Verwendung in einem Stromnetz, wobei das Transformatorsystem konfiguriert ist, um eine Netzspannung (V_{Netz}) aus einem elektrischen Stromnetz (20) in eine regulierte Spannung (V_{reguliert}) umzuwandeln, die eine Verteilungsniveauspannung ist, und die regulierte Spannung (V_{reguliert}) an eine Stromleitung (30) auszugeben, wobei das Transformatorsystem (10) Folgendes umfasst:
einen ersten Transformator (40), der konfiguriert ist, um die Netzspannung (V_{Netz}) in eine unregulierte Spannung (V_{unreguliert}) herunterzustufen und die unregulierte Spannung (V_{unreguliert}) an einem Ausgang des ersten Transformators (40) bereitzustellen;
einen Shunt-Kopplungstransformator (50), der parallel zu dem Ausgang des ersten Transformators (40) gekoppelt ist und weiter mit Leistungselektronikschalttechnik (60) verbunden ist; und
einen Reihenkopplungstransformator (70), der in Reihe zu dem Ausgang des ersten Transformators (40) gekoppelt ist und weiter mit der Leistungselektronikschalttechnik (60) verbunden ist, wobei
die Leistungselektronikschalttechnik (60) konfiguriert ist, um über den Reihenkopplungstransformator (70) eine Konditionierungsspannung (V_{Konditionierung}) in Reihe zur unregulierten Spannung (V_{unreguliert}) hinzuzufügen, um die regulierte Spannung (V_{reguliert}) zu erzeugen,
der erste Transformator (40), der Reihenkopplungstransformator (70) und der Shunt-Kopplungstransformator (50) in einem einzigen Transformatorbehälter (80) untergebracht sind,
die Leistungselektronikschalttechnik (60) in einem die Leistungselektronikgehäuse (90) getrennt vom Transformatorbehälter (80) untergebracht ist, und
jeder von dem Transformatorbehälter (80) und dem Leistungselektronikgehäuse (90) eine oder mehrere Öffnungen (95) umfasst, durch die elektrische Verbindungen (97) zwischen dem Shunt-Kopplungstransformator (50), dem Reihenkopplungstransformator (70) und der Leistungselektronikschalttechnik (60) hindurchgehen,
wobei das Transformatorsystem (10) weiter einen Rahmen umfasst, der den ersten Transformator (40) stützt, wobei der Rahmen konfiguriert ist, um ein Gewicht des ersten Transformators (40) über eine Basis des Rahmens zu verteilen, der eine Grundfläche aufweist, die im Wesentlichen die gleiche ist wie die Grundfläche des ersten Transformators (40), wobei der Rahmen weiter den Reihenkopplungstransformator (70) und den Shunt-Kopplungstransformator (50) so stützt, dass ein Gewicht des Reihenkopplungstransformators (70) und des Shunt-Kopplungstransformators (50) über die Basis des Rahmens verteilt wird.

2. Transformatorsystem (10) nach Anspruch 1, wobei das Leistungselektronikgehäuse (90) auf der Oberseite des Transformatorbehälters (80) angebracht ist oder an mindestens einer Seite des Transformatorbehälters (80) befestigt ist.

3. Transformatorsystem (10) nach Anspruch 1, wobei der Shunt-Kopplungstransformator (50) parallel zu dem Ausgang des ersten Transformators (40) verbunden ist, sodass eine Wicklung (45) des ersten Transformators (40) parallel zu einer Wicklung (55) des Shunt-Kopplungstransformators (50) verbunden ist, und wobei der Reihenkopplungstransformator (70) in Reihe zu dem Ausgang des ersten Transformators (40) verbunden ist, sodass die Wicklung (45) des ersten Transformators (40) weiter in Reihe zu einer Wicklung (75) des Reihenkopplungstransformators (70) verbunden ist.

4. Transformatorsystem (10) nach einem der Ansprüche 1 bis 3, wobei die Leistungselektronikschalttechnik (60) ein oder mehrere Schaltelemente (342) umfasst, deren Schaltung durch eine Steuereinheit (210) steuerbar ist, um mindestens eines von einer Größe und einer Phase der Konditionierungsspannung (V_{Konditionierung}) zu bestimmen.

5. Transformatorsystem (10) nach einem der Ansprüche 1 bis 4, wobei die Leistungselektronikschalttechnik (60) und der Reihenkopplungstransformator (70) konfiguriert sind, um die Konditionierungsspannung (V_{Konditionierung}) im Wesentlichen phasengleich oder im Wesentlichen gegenphasig zur unregulierten Spannung (V_{unreguliert}) so bereitzustellen, dass ein aktiver Stromfluss zur Stromleitung (30) gesteuert wird.

6. Transformatorsystem (10) nach einem der Ansprüche 1 bis 4, wobei die Leistungselektronikschalttechnik (60) und der Reihenkopplungstransformator (70) konfiguriert sind, um die Konditionierungsspannung (V_{Konditionierung}) im Wesentlichen in einer Quadraturphase in Bezug auf einen Ausgangsstrom des ersten Transformators (40) so bereitzustellen, dass ein reaktiver Stromfluss der Stromleitung (30) gesteuert wird.

7. Transformatorsystem (10) nach einem vorstehenden Anspruch, wobei die Leistungselektronikschalttechnik (60) einen Gleichrichter (320), einen Wechselrichter (340) und einen Gleichstrom-Zwischenkreiskondensator (330) umfasst, und wobei
der Gleichrichter (320) einen ersten Wechselstromanschluss, der mit dem Shunt-Kopplungstransformator (50) verbunden ist, und einen ersten Gleichstromanschluss, der mit dem Gleichstrom-Zwischenkreiskondensator (330) verbunden ist, umfasst, wobei der Gleichrichter (320) betriebsfähig ist, um den Gleichstrom-Zwischenkreiskondensator (330) durch Ziehen von Strom von dem Ausgang des ersten Transformators (40) über den Shunt-Kopplungstransformator (50) zu laden, und
der Wechselrichter (340) einen zweiten Gleichstromanschluss, der mit dem Gleichstrom-Zwischenkreiskondensator (330) verbunden ist, und einen zweiten Wechselstromanschluss, der mit dem Reihenkopplungstransformator (70) verbunden ist, umfasst, wobei der Wechselrichter (340) betriebsfähig ist, um eine Gleichspannung des Gleichstrom-Zwischenkreiskondensators (330) in eine Wechselspannung so umzuwandeln, dass bewirkt wird, dass der Reihenkopplungstransformator (70) die Konditionierungsspannung (V_{Konditionierung}) in Reihe zur unregulierten Spannung (V_{unreguliert}) hinzufügt.

8. Transformatorsystem (10) nach Anspruch 7, wobei der Wechselrichter (340) ein Wandler mit einer ersten Spannungsquelle (510) ist, der konfiguriert ist, um den Gleichstrom-Zwischenkreiskondensator (330) über den Reihenkopplungstransformator (70) zu laden.

9. Transformatorsystem (10) nach Anspruch 7 oder Anspruch 8, wobei der Gleichrichter (320) ein Wandler mit einer zweiten Spannungsquelle (620) ist, der konfiguriert ist, um reaktiven Stromfluss der Stromleitung (40) über den Shunt-Kopplungstransformator (50) zu steuern.

10. Transformatorsystem (10) nach Anspruch 9, wobei der Wandler mit der zweiten Spannungsquelle (620) konfiguriert ist, um den reaktiven Stromfluss der Stromleitung (30) auf Grundlage einer Größe einer Spannung an dem ersten Wechselstromanschluss des Gleichrichters (320) zu steuern, und wobei der Wandler der zweiten Spannungsquelle (620) konfiguriert ist, um einen realen Stromfluss der Stromleitung auf Grundlage einer Phase der Spannung an dem ersten Wechselstromanschluss zu steuern.

11. Transformatorsystem (10) nach einem der Ansprüche 7 bis 10, wobei
der Shunt-Kopplungstransformator (50) konfiguriert ist, um die unregulierte Spannung (V_{unreguliert}) heraufzustufen und dem Gleichrichter (320) die heraufgestufte unregulierte Spannung bereitzustellen, und
der Reihenkopplungstransformator (70) konfiguriert ist, um eine Ausgangsspannung des Wechselrichters (340) herunterzustufen und die heruntergestufte Spannung als die Konditionierungsspannung (V_{Konditionierung}) bereitzustellen.

12. Transformatorsystem (10) nach einem vorstehenden Anspruch, wobei das Transformatorsystem (10) weiter eine Steuereinheit (210) umfasst, die konfiguriert ist, um Messwerte zu empfangen, die mindestens eines von einer Ausgangsspannung des Transformatorsystems (10), einem Ausgangsstrom des Transformatorsystems (10), einer Ausgangsspannung des ersten Transformators (40) und einem Ausgangsstrom des ersten Transformators (40) angeben, und wobei die Steuereinheit (210) konfiguriert ist, um den Betrieb der Leistungselektronikschalttechnik (60) auf Grundlage der empfangenen Messwerte zu steuern.

13. Transformatorsystem (10) nach einem vorstehenden Anspruch, wobei das Transformatorsystem (10) konfiguriert ist, um als die Netzspannung (V_{Netz}) eine dreiphasige Netzspannung oder eine einphasige Netzspannung zu empfangen.

14. Transformatorsystem (10) nach einem vorstehenden Anspruch, wobei der Transformatorbehälter (80) ein flüssiges Kühlmittel enthält und der erste Transformator (40), der Reihenkopplungstransformator (70) und der Shunt-Kopplungstransformator (50) im flüssigen Kühlmittel eingetaucht sind.

## Revendications

1. Système de transformateur (10) destiné à être utilisé dans un réseau de distribution, le système de transformateur étant configuré pour convertir une tension de réseau (V_{réseau}) provenant d'un réseau électrique (20) en une tension régulée (V_{régulée}) qui est une tension de niveau de distribution et pour délivrer en sortie la tension régulée (V_{régulée}) à une ligne électrique (30), le système de transformateur (10) comprenant :
un premier transformateur (40) configuré pour abaisser la tension de réseau (V_{réseau}) à une tension non régulée (V_{non régulée}) et fournir la tension non régulée (V_{non régulée}) au niveau d'une sortie du premier transformateur (40) ;
un transformateur de couplage en dérivation (50) connecté en parallèle à la sortie du premier transformateur (40) et en outre connecté à des circuits électroniques de puissance (60) ; et
un transformateur de couplage en série (70) connecté en série à la sortie du premier transformateur (40) et en outre connecté au circuit électronique de puissance (60). dans lequel
Le circuit électronique de puissance (60) est configuré pour ajouter, par l'intermédiaire du transformateur de couplage en série (70), une tension de conditionnement (V_{conditionnement}) en série à la tension non régulée (V_{non régulée}) pour générer la tension régulée (V_{régulée}).
Le premier transformateur (40), le transformateur de couplage en série (70) et le transformateur de couplage en dérivation (50) sont logés dans un seul réservoir de transformateur (80),
le circuit électronique de puissance (60) est logé dans une enceinte électronique de puissance (90) séparée du réservoir de transformateur (80), et
chacun du réservoir de transformateur (80) et de l'enceinte d'électronique de puissance (90) comprend une ou plusieurs ouvertures (95) à travers lesquelles passent des connexions électriques (97) entre le transformateur de couplage en dérivation (50), le transformateur de couplage en série (70) et le circuit électronique de puissance (60).
dans lequel le système de transformateur (10) comprend en outre un cadre supportant le premier transformateur (40), le cadre étant configuré pour répartir le poids du premier transformateur (40) sur une base du cadre présentant une empreinte sensiblement identique à l'empreinte du premier transformateur (40), le cadre supportant en outre le transformateur de couplage en série (70) et le transformateur de couplage en dérivation (50) de manière à répartir un poids du transformateur de couplage en série (70) et du transformateur de couplage en dérivation (50) sur la base du cadre.

2. Système de transformateur (10) selon la revendication 1, dans lequel l'enceinte d'électronique de puissance (90) est montée sur le dessus du réservoir de transformateur (80) ou fixée à au moins un côté du réservoir de transformateur (80).

3. Système de transformateur (10) selon la revendication 1, dans lequel le transformateur de couplage en dérivation (50) est connecté en parallèle à la sortie du premier transformateur (40) de telle sorte qu'un enroulement (45) du premier transformateur (40) est connecté en parallèle à un enroulement (55) du transformateur de couplage en dérivation (50), et dans lequel le transformateur de couplage en série (70) est connecté en série à la sortie du premier transformateur (40) de telle sorte que l'enroulement (45) du premier transformateur (40) soit en outre connecté en série avec un enroulement (75) du transformateur de couplage en série (70).

4. Système de transformateur (10) selon l'une quelconque des revendications 1 à 3, dans lequel le circuit électronique de puissance (60) comprend un ou plusieurs éléments de commutation (342) dont la commutation est commandable par un dispositif de commande (210) pour déterminer au moins l'une d'une amplitude et d'une phase de la tension de conditionnement (V_{conditionnement}).

5. Système de transformateur (10) selon l'une quelconque des revendications 1 à 4, dans lequel le circuit électronique de puissance (60) et le transformateur de couplage en série (70) sont configurés pour fournir la tension de conditionnement (V_{conditionnement}) soit sensiblement en phase, soit sensiblement en opposition de phase avec la tension non régulée (V_{non régulée}) de manière à commander un flux de puissance active de la ligne électrique (30).

6. Système de transformateur (10) selon l'une quelconque des revendications 1 à 4, dans lequel le circuit électronique de puissance (60) et le transformateur de couplage en série (70) sont configurés pour fournir la tension de conditionnement (V_{conditionnement}) sensiblement en phase en quadrature par rapport à un courant délivré en sortie du premier transformateur (40) de manière à commander un flux de puissance réactive de la ligne électrique (30).

7. Système de transformateur (10) selon l'une quelconque des revendications précédentes, dans lequel le circuit électronique de puissance (60) comprend un redresseur (320), un onduleur (340) et un condensateur de liaison CC (330), et dans lequel
le redresseur (320) comprend une première borne CA connectée au transformateur de couplage en dérivation (50) et une première borne CC connectée au condensateur de liaison CC (330), le redresseur (320) étant actionnable pour charger le condensateur de liaison CC (330) en tirant de l'énergie de la sortie du premier transformateur (40) via le transformateur de couplage en dérivation (50), et
l'onduleur (340) comprenant une seconde borne CC connectée au condensateur de liaison CC (330) et une seconde borne CA connectée au transformateur de couplage en série (70), l'onduleur (340) étant actionnable pour convertir une tension continue provenant du condensateur de liaison CC (330) en une tension alternative de manière à amener le transformateur de couplage en série (70) à ajouter la tension de conditionnement (V_{conditionnement}) en série à la tension non régulée (V_{non régulée}).

8. Système de transformateur (10) selon la revendication 7, dans lequel l'onduleur (340) est un premier convertisseur de source de tension (510) configuré pour charger le condensateur de liaison CC (330) via le transformateur de couplage en série (70).

9. Système de transformateur (10) selon la revendication 7 ou la revendication 8, dans lequel le redresseur (320) est un second convertisseur de source de tension (620) configuré pour commander un flux de puissance réactive de la ligne électrique (40) via le transformateur de couplage en dérivation (50).

10. Système de transformateur (10) selon la revendication 9, dans lequel le second convertisseur de source de tension (620) est configuré pour commander le flux de puissance réactive de la ligne électrique (30) sur la base d'une amplitude d'une tension au niveau de la première borne CA du redresseur (320), et dans lequel le second convertisseur de source de tension (620) est configuré pour commander un flux de puissance réelle de la ligne électrique sur la base d'une phase de la tension au niveau de la première borne CA.

11. Système de transformateur (10) selon l'une quelconque des revendications 7 à 10, dans lequel
le transformateur de couplage en dérivation (50) est configuré pour augmenter la tension non régulée (V_{non régulée}) et fournir la tension non régulée augmentée au redresseur (320), et
le transformateur de couplage en série (70) est configuré pour abaisser une tension délivrée en sortie provenant de l'onduleur (340) et fournir la tension abaissée en tant que la tension de conditionnement (V_{conditionnement}).

12. Système de transformateur (10) selon l'une quelconque des revendications précédentes, dans lequel le système de transformateur (10) comprend en outre un dispositif de commande (210) configuré pour recevoir des valeurs de mesurage indicatives d'au moins l'un ou l'une d'une tension délivrée en sortie du système de transformateur (10), d'un courant délivré en sortie du système de transformateur (10), d'une tension délivrée en sortie du premier transformateur (40) et d'un courant délivré en sortie du premier transformateur (40), et dans lequel le dispositif de commande (210) est configuré pour commander le fonctionnement du circuit électronique de puissance (60) sur la base des valeurs de mesurage reçues.

13. Système de transformateur (10) selon l'une quelconque des revendications précédentes, dans lequel le système de transformateur (10) est configuré pour recevoir, en tant que tension de réseau (V_{réseau}), une tension de réseau triphasée ou une tension de réseau monophasée.

14. Système de transformateur (10) selon l'une quelconque des revendications précédentes, dans lequel le réservoir de transformateur (80) contient un liquide de refroidissement et le premier transformateur (40), le transformateur de couplage en série (70) et le transformateur de couplage en dérivation (50) sont immergés dans le liquide de refroidissement.
